# EUROPÄISCHE PATENTSCHRIFT

(11) **EP 1 483 523 B1**
(45) Veröffentlichungstag und Bekanntmachung des Hinweises auf die Patenterteilung: **02.01.2013**
(21) Anmeldenummer: 03706596.8
(22) Anmeldetag: 01.03.2003
(51) Int. Cl.: F16L 37/36, F16L 37/44, F16L 29/00

(54) **ANSCHLUSSKUPPLUNG MIT SCHALTEINHEIT**
CONNECTING COUPLING WITH A SWITCH UNIT
RACCORD AVEC UNITE DE COMMANDE

(30) Priorität: 02.03.2002 DE 20203296 U
(43) Veröffentlichungstag der Anmeldung: 08.12.2004
(73) Patentinhaber: Weh, Erwin, 89257 Illertissen (DE); Weh, Wolfgang, 89257 Illertissen (DE)
(72) Erfinder: Weh, Erwin, 89257 Illertissen (DE); Weh, Wolfgang, 89257 Illertissen (DE)
(74) Vertreter: Fiener, Josef
(86) Internationale Anmeldenummer: PCT/EP2003/002111
(87) Internationale Veröffentlichungsnummer: WO 2003/074923

(56) Entgegenhaltungen:
- WO-A-00/52378
- US-A- 4 222 411
- US-A- 6 035 894

## Beschreibung

Die Erfindung betrifft eine Anschlußkupplung für die Übertragung von gasförmigen und/oder flüssigen Fluiden, insbesondere zum Befüllen von Fahrzeug-Gastanks.

Mit derartigen Anschlußkupplungen soll eine sichere und schnell anschließbare Übertragung eines Fluids von einer Druckquelle, beispielsweise von einer Betankungsanlage aus zu einem Fahrzeug erreicht werden. Besonders wichtig ist hierbei die einfache und sichere Bedienbarkeit, so daß auch bei hohen Betankungsdrücken von 200 bar (20MPa) und mehr eine problemlose Handhabung möglich ist. US-A-4 212 411 beschreibt eine Anschlusskupplung, die alle Merkmale des Oberbegriffs des Anspruchs 1 beinhaltet.

Eine Anschlußkupplung ist auch in der WO 98/05898 der Anmelder beschrieben, wobei die Schnellanschlußkupplung ein Gehäuse mit einem Fluideinlaß und einem Fluidauslaß aufweist, sowie mehrere Ventile vorgesehen sind, um eine sichere Abdichtung der Schnellanschlußkupplung bis zur vollständigen Herstellung der Verbindung zu gewährleisten. Diese Ventile werden dabei nach Ansetzen der Schnellanschlußkupplung durch Drehen eines Steuerungshebels in einer bestimmten vorgegebenen Reihenfolge geschaltet, wobei zuerst durch das Aufschieben der Schnellanschlußkupplung an einen Anschlußnippel das Auslaßventil geöffnet wird, dann bei weiterer Bewegung des Steuerungshebels die als Verriegelungselemente dienenden Spannzangen geschlossen werden und schließlich das Einlaßventil geöffnet wird. Der Steuerungshebel ist hierbei über eine Exzenterwelle mit der Schiebehülse für die Beaufschlagung der Spannzangen und mit einem Dichtkolben in Eingriff, der auch den Fluideinlaß nach erfolgtem Anschluß der Steckkupplung freigibt.

Durch Tordierung der Anschlußschläuche kann der Steuerungshebel dabei eine ungünstige Stellung (z. B. nach rechts hin) einnehmen, was für einen Linkshänder beim Bedienen der Anschlußkupplung äußerst unbequem ist.

Obwohl sich die bekannte Anschlußkupplung durch ihre besonders sichere Anschlußmöglichkeit bewährt hat, ist sie hinsichtlich ihrer Handhabung noch verbesserungsfähig.

Demzufolge liegt der Erfindung die Aufgabe zugrunde, eine Anschlußkupplung, insbesondere als Schnellanschlußkupplung der eingangs genannten Art zu schaffen, die bei kompaktem Aufbau eine besonders einfache Handhabung ermöglicht.

Diese Aufgabe wird gelöst durch eine Anschlußkupplung gemäß den Merkmalen des Anspruches 1. Bevorzugte Weiterbildungen der Erfindung sind Gegenstand der Unteransprüche.

Die vorgeschlagene Anschlußkupplung eignet sich insbesondere für den Einsatz bei einer Schnellanschlußkupplung zur Betankung von Erdgasfahreugen, wobei sich eine besonders einfache und kompakte Bauweise ergibt, da der Steuerungshebel mitsamt der Schalteinheit um die Zentralachse herum drehbar ausgebildet ist und somit beim Anschlußvorgang jede vom Bediener gewünschte Verdrehstellung einnehmen kann. Insbesondere kann die Schalteinheit in bevorzugter Ausführungsform durch die einander gegenüberliegenden Ringschieber in eine für die Bedienperson passende Stellung verdreht werden, was eine besonders sichere und bequeme Handhabung ergibt.

Durch innerhalb der Anschlußkupplung integrierte Durchtrittsschlitze im mittleren Gehäuseteil wird eine sichere Führung der Schalteinheit erreicht und somit ein stabiler und kompakter Aufbau der Anschlußkupplung erzielt. Da sich die Schalteinheit außerhalb des Druckbereiches befindet, wird eine einfache und leichtgängige Handhabbarkeit gewährleistet, so dass die Schnellanschlußkupplung auch von Laien problemlos angeschlossen werden kann.

Um bei einer eventuell auftretenden Undichtigkeit einer Dichtung keinen Druckaufbau zuzulassen, ist im Gehäuse der Schalteinheit bevorzugt eine Entlüftungsbohrung vorgesehen. Diese wird bevorzugt mit einem Sinterfilter oder einem ähnlichen Material verschlossen, wobei ein Schmutzeintritt vermieden wird.

Nachfolgend wird ein Ausführungsbeispiel anhand der beiliegenden Zeichnung näher erläutert und beschrieben. Hierin zeigt:
- Fig. 1: eine Seitenansicht einer Anschlußkupplung mit einer integrierten Schalteinheit, wobei die Anschlußkupplung im Längs-Halbschnitt und in angeschlossener Stellung an einen Anschlußnippel dargestellt ist; und
- Fig. 2: eine vergrößerte Darstellung der Schalteinheit der Anschlußkupplung gemäß Fig. 1.

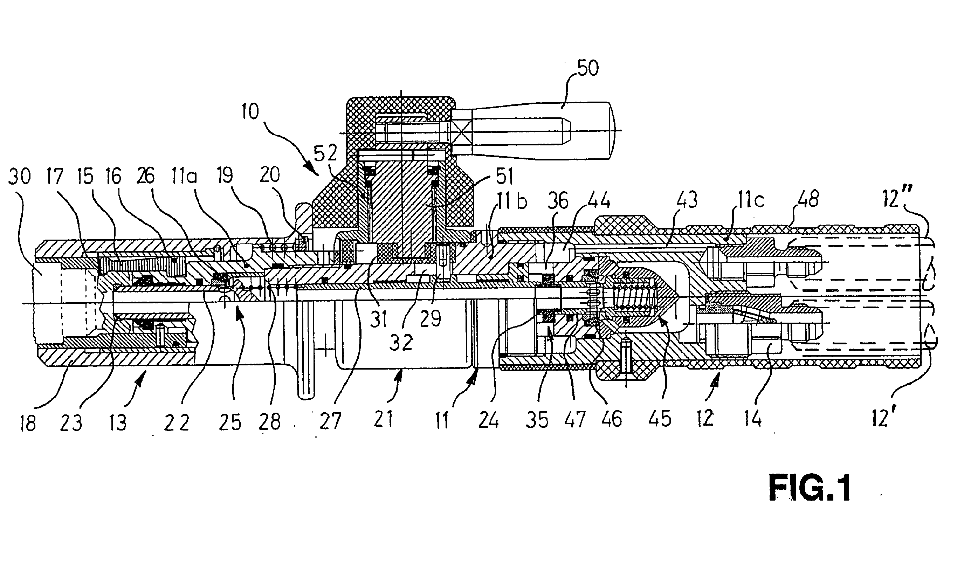

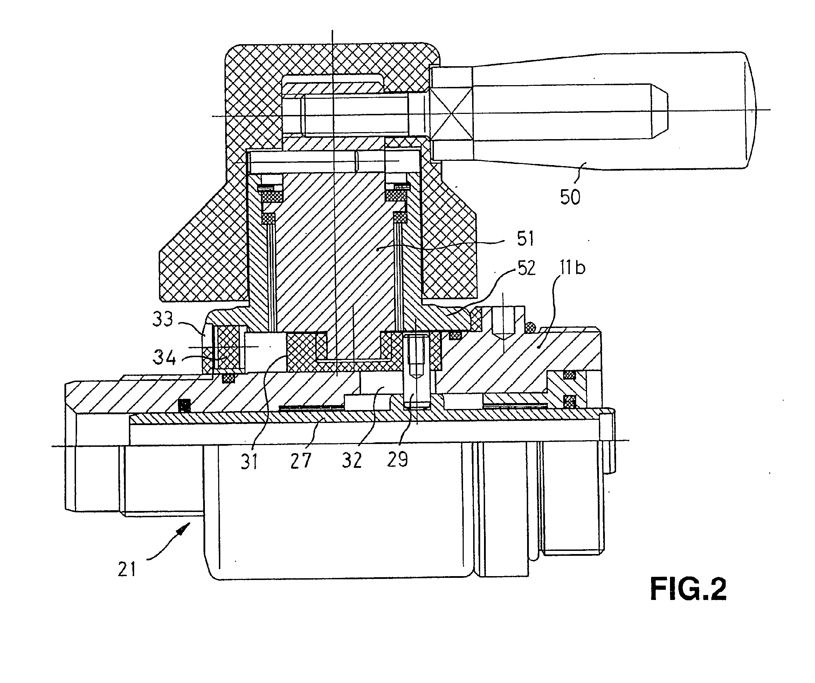

In Fig. 1 ist ein bevorzugtes Ausführungsbeispiel einer Anschlußkupplung 10 in Form einer sog. Schnellanschlußkupplung dargestellt, die an einen hier links angedeuteten Anschlußnippel 30 angekuppelt ist. Die Anschlußkupplung 10 weist ein rohrförmiges Gehäuse 11 mit mehreren, miteinander verschraubten Gehäuseteilen 11a, 11b und 11c auf, wobei das hier rechte Gehäuseteil 11c als Einlaßbereich 12 dient und der linke Bereich als Auslaß 13 für die Weiterleitung des zu übertragenden Fluids an den Anschlußnippel 30. Um den mittleren Gehäuseteil 11b herum ist eine Schalteinheit 21 mit Steuerungshebel 50 angeordnet (vgl. auch Fig. 2). Der Einlaßbereich 12 weist einen Anschlußadapter 14 auf, an den über ein Gewinde eine Fluidleitung 12' zur Zuführung des zu übertragenden Fluids angeschlossen werden kann. Der Anschlußadapter 14 mit einer eingesetzten Filterhülse kann hierbei in Anpassung an das zu übertragende Fluid, insbesondere an die jeweils gewünschten Zuführdruckwerte, Durchlaßquerschnitte usw. entsprechend gestaltet sein.

Im Bereich des Auslasses 13 sind mehrere, in Rohrform angeordnete, längliche Spannzangen 15 vorgesehen, die kurz vor dem Aufstecken auf den Anschlußnippel 30 radial nach außen aufgespreizt werden können. Die länglichen Spannzangen 15 sind dabei - wie durch den eingangs genannten Stand der Technik bekannt - durch eine Ringfeder 16 vorgespannt, so dass die Spannzangen 15 radial nach außen aufspreizbar sind. An dem hier linken äußeren Ende mit nach innen abgekröpften Flächen weisen die Spannzangen 15 jeweils korrespondierend zu einem nutförmigen Anschlußprofil des Anschlußnippels 30 ausgebildete formschlüssige Eingriffsprofile 17 auf. Deren Aufbau ist im eingangs genannten Stand der Technik ebenfalls näher beschrieben, so dass hier auf eine weitere Erläuterung verzichtet werden kann. Es sei lediglich noch erwähnt, dass im Bereich des Auslasses 13 innen ein das Auslaßventil bildender Dichtkolben 22 geführt ist, der an seiner vorderen stirnseite eine konische Dichtfläche 23 zur Anlage an einem Dichtring des Anschlußnippels 30 aufweist, so dass das im wesentlichen entlang der Zentralachse der Anschlußkupplung 10 strömende gasförmige und/oder flüssige Fluid nicht nach außen hin austreten kann.

Um die Spannzangen 15 herum ist eine äußere Schiebehülse 18 vorgesehen, die an dem zylindrischen Außenmantel des hier linken Gehäuseteils 11a geführt ist und mit einer Druckfeder 19 in Richtung vom Anschlußnippel 30 weg vorgespannt ist. Die Druckfeder 19 stützt sich hierbei an einen Abstützring 20 ab und schiebt somit die Schiebehülse 18 zu dem Steuerungshebel 50 mit einer Exzenterwelle 51 hin, deren Aufbau nachfolgend noch näher beschrieben wird, insbesondere mit Bezug auf Fig. 2.

Das am Dichtkolben 22 vorgesehene Auslaßventil 25 dichtet mittels eines Dichtringes als Ventilsitz 26 gegenüber dem Dichtkolben 22 in geschlossener Stellung ab. Das Auslaßventil 25 ist hierbei von einer Druckfeder 28 beaufschlagt, die sich zur rechten Seite hin auf einen Schaltschieber 27 der Schalteinheit 21 abstützt. Durch dieses Auslaßventil 25 wird sichergestellt, dass in der hier nicht dargestellten abgekuppelten Position bzw. bis kurz vor dem Anschluß der Anschlußkupplung 10 an den Anschlußnippel 30 das durch den Anschlußadapter 14 zugeführte Fluid nicht ausströmen kann. Der Schaltschieber 27 wird beim Abkuppeln der Anschlußkupplung 10 vom Anschlußnippel 30 durch die Schalteinheit 21 entlang der Anschlußkupplungs-Achse verschoben und bildet so zusammen mit einer Dichtscheibe 24 ein Entlüftungsventil 35.

Das Entlüftungsventil 35 und der Schaltschieber 27 werden hierbei durch Verschwenken des Steuerungshebels 50 betätigt, da die damit verbundene, in einer Hülse 52 gelagerte Exzenterwelle 51 mit dem Schaltschieber 27 gekoppelt ist, nämlich durch Eingriff mehrerer Bolzen 29, die in Axialschlitzen 32 verschiebbar eingesetzt sind und mit einem äußeren Ringschieber 31 in Verbindung stehen. Dieser weist eine Ringnut auf, in die das hier untere Ende der Exzenterwelle 51 eingreift. Dabei ist die gesamte Schalteinheit 21 mit dem Steuerungshebel 50 um diesen Ringschieber 31 herum drehbar, da die Hülse 52 am Außenumfang des mittleren Gehäuseteils 11b drehbar gelagert ist.

Wie aus der hier dargestellten Anschlußstellung der Anschlußkupplung 10 ersichtlich ist, wird beim Aufstecken auf den Anschlußnippel 30 das Eingriffsprofil 17 der Spannzangen 15 mit dem Anschlußnippel 30 in Eingriff gebracht. Durch Betätigung (Verschwenken um ca. 180°) des Steuerungshebels 50 in die hier gezeigte Position wird die Schiebehülse 18 über die Spannzangen 15 geschoben und diese somit verriegelt. Bei Druckbeaufschlagung (Beginn des Betankungsvorganges) wird der Dichtkolben 22 zunächst (auch unter Wirkung der Feder 28) nach links verschoben. Bei Anlage an der Dichtfläche 23 wird unter Verschiebung des Dichtkolbens 22 nach rechts zudem der Ventilsitz 26 am Dichtkolben 22 und damit das Auslaßventil 25 geöffnet. Dabei hat das Eingriffsprofil 17 an dem korrespondierend ausgebildeten Anschlußprofil des Anschlußnippels 30 bereits eingegriffen, wobei durch die Axialbewegung der Schiebehülse 18 diese über die radial äußeren Enden der Spannzangen 15 greift, so dass diese am Anschlußnippel 30 formschlüssig gehalten werden.

Zum Lösen der Anschlußkupplung 10 und damit dem Zurückführen der hier dargestellten Anschlußstellung in die Öffnungsstellung wird die Schiebehülse 18 nach Verdrehen des Steuerungshebels 50 von der Druckfeder 19 zurückgeschoben. Nach einem kurzen Weg können die Spannzangen 15 sich wieder radial nach außen aufspreizen. Da vorher der Fluiddruck unterbrochen wurde (z. B. durch Schließen eines Betankungsventils), wird zudem der Dichtkolben 22 hier nach rechts in Richtung zum Einlaßbereich 12 hin verschoben, sowie das Auslaßventil 25 am Ventilsitz 26 geschlossen.

Im Einlaßbereich 12 ist weiterhin ein Einlaßventil 45 mit einem zugeordneten Ventilsitz 46 zentral im Gehäuse 11 bzw. dem Gehäuseteil 11c der Anschlußkupplung 10 angeordnet. Das Einlaßventil 45 ist ebenfalls durch den Steuerungshebel 50 und seine Exzenterwelle 51 durch die Koppelung mit dem Schaltschieber 27 axial verschiebbar. Dieser Schaltschieber 27 verschiebt nämlich über die Dichtscheibe 24 in der gezeigten Anschlußstellung einen Ventilschieber 47 des Einlaßventils 45 in die Öffnungsstellung, so dass das vom Einlaßbereich 12 zuströmende Fluid durch den Ventilschieber 47 und einen Durchlaß in der Dichtscheibe 24 sowie den rohrförmigen Schaltschieber 27 zum Auslaß 13 hin fließen kann.

Beim Lösen der Anschlußkupplung 10 wird durch Verdrehen des Steuerungshebels 50 (um ca. 180°) der Schaltschieber 27 über die Bolzen 29 nach links verschoben, so dass sich auch die Dichtscheibe 24 aus dem Dichteingriff lösen kann. Hierbei kann sich der Druck innerhalb der Anschlußkupplung 10 über Durchtrittschlitze 36 zu einem Druckausgleichsraum 44 hin abbauen.

Wie oben erwähnt, wird somit beim Abkuppeln der Anschlußkupplung 10 das Entlüftungsventil 35 durch die Exzenterwelle 51 und den Schaltschieber 27 geöffnet. Hierdurch strömt noch anstehendes Druckmedium über den Druckausgleichsraum 44 zu einer Entlüftungsbohrung 43, die parallel zu der zentralen Fluidpassage (durch die Ventile 45, 35 und 25 hindurch) im Gehäuseteil 11c der Anschlußkupplung 10 verläuft. Die Entlüftungsbohrung 43 mündet in der zweiten Leitung 12", die bevorzugt als Rückführschlauch ausgebildet ist und ebenso wie die Zuführleitung von einer Gehäusekappe 48 umgrenzt ist, um als Handgriff für eine einfache Handhabung dienen zu können. Die Entlüftungsleitung 12 " und die am Adapter 14 angeschlossene Fluidleitung 12' verlaufen somit immer zumindest weitgehend parallel zueinander.

In Fig. 2 ist die Schalteinheit 21 vergrößert dargestellt, wobei in der Hülse 52 für einen eventuellen Druckabbau noch eine Entlüftungsbohrung 33 vorgesehen ist. Diese ist mit einer Filterscheibe 34, insbesondere einem Sinterfilter abgeschlossen und liegt in Axialrichtung dem Ringschieber 31 gegenüber, der mittels der Exzenterwelle 51 in Axialrichtung beweglich ist und dabei über die Bolzem 29 den inneren Schaltschieber 27 ebenfalls um einige Zentimeter axial verschiebt, soweit dies durch die Länge der Axialschlitze 32 möglich ist.

## Patentansprüche

1. Anschlusskupplung für die Übertragung von gasförmigen und/oder flüssigen Fluiden, insbesondere zum Befüllen von Fahrzeug- Gastanks, mit einer Schalteinheit (21) zur Betätigung von Ventilen (35) über einen Schaltschieber (27), wobei der Schaltschieber (27) durch wenigstens einen Bolzen (29) mit einem äußeren Ringschieber (31) gekoppelt ist,
**dadurch gekennzeichnet, dass**
die Schalteinheit (21) einen Steuerungshebel (50) und eine Exzenterwelle (51) aufweist, wobei die Exzenterwelle (51) in eine umlaufende Ringnut am Ringschieber (31) eingreift und die Exzenterwelle (51) in einer Hülse (52) gelagert ist, die am Umfang des mittleren Gehäuseteils (11b) um 360° drehbar gelagert ist.

2. Anschlusskupplung nach Anspruch 1, **dadurch gekennzeichnet, dass** zwischen Schaltschieber (27) und dem äußeren Ringschieber (31) mehrere Bolzen (29), insbesondere vier, vorgesehen sind.

3. Anschlusskupplung nach Anspruch 2, **dadurch gekennzeichnet, dass** die Bolzen (29) in Axialschlitzen (32) im mittleren Gehäuseteil (11 b) der Anschlusskupplung (10) geführt sind.

4. Anschlusskupplung nach Anspruch 1, **dadurch gekennzeichnet, dass** die Hülse (52) eine Entlüftungsbohrung (33) aufweist.

5. Anschlusskupplung nach Anspruch 4, **dadurch gekennzeichnet, dass** die Entlüftungsbohrung (33) von einer Filterscheibe (34) abgeschlossen ist.

6. Anschlusskupplung nach Anspruch 5, **dadurch gekennzeichnet, dass** die Filterscheibe (34) als Sinterfilter ausgebildet ist.

## Claims

1. Connecting coupling for transferring gaseous and/or liquid fluids, especially for filling gas tanks of motor vehicles, comprising a switch unit (21) for actuating valves (35) via a switch slider (27), wherein the switch slider (27) is coupled by at least one bolt (29) with an outer ring slide (31),
**characterized in that** the switch unit (21) comprises a control lever (50) and an eccentric shaft (51), wherein the eccentric shaft (51) engages in a circular annular groove on the ring slide (31) and the eccentric shaft (51) is held in a sleeve (52) which is rotatably supported around 360° on the circumference of the middle housing part (11).

2. Connecting coupling according to claim 1, **characterized in that** a plurality of bolts (29), especially four, are provided between the switch slider (27) and the outer ring slide (31).

3. Connecting coupling according to claim 2, **characterized in that** the bolts (29) are guided in axial slots (32) in the middle housing part (11b) of the connecting coupling (10).

4. Connecting coupling according to claim 1, **characterized in that** the sleeve (52) comprises a ventilation bore (33).

5. Connecting coupling according to claim 4, **characterized in that** the ventilation bore (33) is closed off by a filter disk (34).

6. Connecting coupling according to claim 5, **characterized in that** the filter disk (34) is formed as a sintered filter.

## Revendications

1. Raccord dévolu au transfert de fluides gazeux et/ou liquides, notamment en vue du remplissage de réservoirs à gaz de véhicules, comportant une unité de commutation (21) conçue pour actionner des vannes (35) par l'intermédiaire d'un tiroir de distribution (27), ledit tiroir de distribution (27) étant couplé à un anneau coulissant extérieur (31) par l'intermédiaire d'au moins un tenon (29),
**caractérisé par le fait que**
l'unité de commutation (21) comprend un levier de commande (50) et un arbre à excentrique (51), lequel arbre à excentrique (51) pénètre dans une rainure annulaire périphérique pratiquée dans l'anneau coulissant (31), ledit arbre à excentrique (51) étant logé dans une douille (52) montée, à rotation de 360°, sur le pourtour de la partie centrale (11b) du carter.

2. Raccord selon la revendication 1, **caractérisé par le fait que** plusieurs tenons (29), notamment au nombre de quatre, sont prévus entre le tiroir de distribution (27) et l'anneau coulissant extérieur (31).

3. Raccord selon la revendication 2, **caractérisé par le fait que** les tenons (29) sont guidés dans des fentes axiales (32) ménagées dans la partie centrale (11b) du carter dudit raccord (10).

4. Raccord selon la revendication 1, **caractérisé par le fait que** la douille (52) présente un trou d'évent (33).

5. Raccord selon la revendication 4, **caractérisé par le fait que** le trou d'évent (33) est occulté par un disque de filtration (34).

6. Raccord selon la revendication 5, **caractérisé par le fait que** le disque de filtration (34) est réalisé sous la forme d'un filtre en matière frittée.
